# NOUVEAU FASCICULE DE BREVET EUROPEEN

(11) **EP 1 007 482 B2**
(45) Date de publication et mention de la décision concernant l'opposition: **25.06.2008**
(45) Mention de la délivrance du brevet: 11.09.2002
(21) Numéro de dépôt: 98940336.5
(22) Date de dépôt: 24.07.1998
(51) Int. Cl.: C02F 3/12, C02F 1/78, C02F 1/34, C02F 1/36, C02F 9/00

(54) **PROCEDE D'EPURATION D'EAUX USEES COMPRENANT UN TRAITEMENT ADDITIONNEL DES BOUES PAR OZONATION**
METHODE ZUR ABWASSERREINIGUNG MIT EINER ZUSÄTZLICHEN SCHLAMMBEHANDLUNG DURCH OZON
METHOD FOR PURIFYING WASTE WATER COMPRISING AN ADDITIONAL SLUDGE TREATMENT BY OZONATION

(30) Priorité: 01.08.1997 FR 9709882
(43) Date de publication de la demande: 14.06.2000
(73) Titulaire: DEGREMONT, 92500 Rueil-Malmaison (FR)
(72) Inventeur: THIEBLIN, Eric, F-78370 Plaisir (FR); PUJOL, Roger, F-78400 Chatou (FR); HAUBRY, André, F-78250 Mezy sur Seine (FR)
(74) Mandataire: Burbaud, Eric
(86) Numéro de dépôt international: PCT/FR1998/001647
(87) Numéro de publication internationale: WO 1999/006327

(56) Documents cités:
- EP-A- 0 645 347
- WO-A-95/13990
- DE-A- 2 546 756
- DE-A- 4 407 564
- GB-A- 1 116 570
- US-A- 3 650 950
- US-A- 3 772 188
- US-A- 4 370 235
- Erkenntnisse und Erfahrungen aus praktischen Anwendungen der Klärschlamm-Desintegration, Zeitschrift Korrespondenz Abwasser, Juli 1996, pages 1289 -1298

## Description

La présente invention est relative aux procédés et dispositifs d'épuration d'eaux usées comprenant un traitement additionnel des boues par ozonation, de façon à réduire de façon significative les quantités de boues produites par un système de traitement biologique, en particulier pour réduire le coût de traitement de ces boues résultant de nouvelles réglementations.

Un des avantages de ladite invention est de permettre d'améliorer la décantabilité des boues après traitement.

Plus particulièrement, l'invention concerne un procédé d'épuration d'eaux usées chargées en matières organiques, procédé comprenant une étape au cours de laquelle les eaux usées séjournent dans un dispositif principal de traitement biologique (constitué par un ou plusieurs réacteurs tels que bassins d'aération, lits bactériens, digesteurs anaérobies, clarificateurs, etc., mettant en oeuvre un traitement biologique associé éventuellement à un traitement physico-chimique), où lesdites matières organiques sont dégradées par des micro-organismes en produisant des boues, une partie de ces boues étant soumise à une ozonation combinée avec une agitation mécanique avant d'être renvoyées dans le dispositif principal de traitement biologique, les boues ainsi soumises à ozonation étant dites ci-après "boues retraitées", procédé dans lequel au cours de l'étape d'ozonation, on consomme de 0,001 à 0,02 g d'ozone par g de matières sèches de boues retraitées.

Le document EP-A-0 645 347 décrit un tel procédé, dans lequel l'ozonation a lieu après acidification des boues retraitées à un pH inférieur à 5, l'agitation mécanique étant mise en oeuvre soit au cours du processus d'acidification pour mélanger les boues retraitées à un réactif d'acidification, soit par pompage en vue de pulvériser une partie des boues retraitées dans le réacteur d'ozonation.

Le procédé décrit dans ce document présente notamment les inconvénients de nécessiter des quantités d'ozone relativement élevées, et de perturber le fonctionnement du dispositif principal de traitement biologique du fait de l'acidification des boues retraitées.

Par ailleurs, le document DE-A-44 07 564 décrit un procédé comprenant une attaque des parois cellulaires de micro-organismes dans des boues, par ultrasons, sans recyclage.

Les documents WO-A-95/13990 et US-A-3772 188 décrivent des procédés de traitement de boues comprenant une agitation mécanique qui permet de disperser le floc.

Enfin, le document US-A-4 370 235 décrit un procédé de traitement de boues comprenant une ozonation combinée avec une agitation mécanique suffisante pour attaquer les parois des micro-organismes contenus dans les boues. Les boues ainsi traitées sont envoyées dans un réacteur de digestion, et non pas recyclées.

La présente invention a notamment pour but de pallier les inconvénients susmentionnés du procédé décrit dans le document EP-A-0 645 347.

A cet effet, l'invention propose un procédé qui est caractérisé en ce qu'on apporte auxdites boues retraitées une énergie mécanique suffisante pour attaquer les parois cellulaires des bactéries et autres micro-organismes contenus dans ces boues retraitées, cette énergie mécanique étant comprise entre 50 et 3000 kj par kg de matières séches de boues retraitées..

Grâce à ces dispositions, l'efficacité du traitement d'ozonation est amélioré par rapport au procédé décrit dans le document EP-A-0 645 347 susmentionné, du fait que l'énergie d'agitation mécanique apportée aux boues retraitées est suffisante pour fragiliser le floc et les parois cellulaires des micro-organismes contenus dans lesdites boues retraitées, afin de permettre une attaque plus efficace de ces micro-organismes par l'ozone. La déstructuration du floc résulte de l'attaque des exopolymères assurant la cohésion dudit floc et entraîne l'éclatement de diverses bactéries et protozoaires.

Ainsi, on peut utiliser des quantités d'ozone nettement moindres que dans le procédé décrit dans le document susmentionné.

De plus, il n'est pas nécessaire d'acidifier les boues retraitées, de sorte que l'on ne perturbe pas le bon fonctionnement du dispositif principal de traitement biologique.

Par ailleurs, le fait de ne pas devoir acidifier les boues retraitées améliore encore le rendement du processus d'ozonation.

Enfin, grâce à la recirculation des boues vers le dispositif principal de traitement biologique, on absorbe la pollution additionnelle générée au moment de la déstructuration des parois cellulaires des micro-organismes (augmentation de la demande chimique en oxygène [DCO], de la demande biochimique en oxygène [DBO] et du carbone organique dissous), pour finalement obtenir une réduction importante des volumes et des masses de boues, une amélioration sensible des indices de boues (notamment indice de Mohlmann) et une minimisation des éventuels désordres biologiques (notamment "bulking" dû aux bactéries filamenteuses).

Dans des modes de réalisation préférés de l'invention, on peut éventuellement avoir recours en outre à l'une et/ou à l'autre des dispositions suivantes :
- le pH des boues retraitées est toujours compris entre 6 et 9 ;
- l'agitation mécanique des boues retraitées a lieu avant leur ozonation ;
- l'agitation mécanique des boues retraitées a lieu après leur ozonation ;
- l'agitation mécanique et l'ozonation des boues retraitées ont lieu dans une même enceinte réactionnelle ;
- un certain débit de boues retraitées, dit premier débit, est prélevé en sortie d'un réacteur d'ozonation des boues retraitées, ce premier débit subissant alors l'agitation mécanique, ledit premier débit étant ensuite renvoyé au réacteur d'ozonation avec un certain débit supplémentaire de boues provenant du réacteur biologique principal, dit deuxième débit, le deuxième débit étant inférieur au premier débit ;
- les boues retraitées subissent une digestion aérobie ou anaérobie en plus de l'ozonation et de l'agitation mécanique ;
- la digestion aérobie ou anaérobie a lieu après ozonation et agitation mécanique ;
- un certain débit de boues retraitées est prélevé en sortie d'un digesteur où est mise en oeuvre la digestion aérobie ou anaérobie des boues retraitées, ce débit de boues retraitées subissant alors l'agitation mécanique et l'ozonation avant d'être renvoyé au digesteur avec un certain débit supplémentaire de boues provenant du réacteur biologique principal ;
- on envoie au dispositif principal de traitement biologique seulement une partie des boues retraitées ayant subi la digestion anaérobie, et on évacue une autre partie des boues retraitées sortant du digesteur anaérobie ;
- l'étape d'ozonation est mise en oeuvre dans un réacteur d'ozonation qui comporte au moins un évent d'où sort un effluent gazeux comprenant au moins de l'ozone et de l'oxygène, le procédé comportant en outre une étape consistant à collecter cet effluent gazeux, et à réutiliser ledit effluent gazeux pour traiter les eaux usées ou un autre liquide résultant du traitement de ces eaux usées ;
- on détruit l'ozone contenu dans l'effluent gazeux collecté en sortie de l'évent, avant de réutiliser ledit effluent gazeux, la destruction de l'ozone pouvant s'effectuer par voie thermique ou catalytique ;
- l'ozonation des boues retraitées est réalisée dans un réacteur d'ozonation travaillant sous pression ;
- après leur passage dans le dispositif principal de traitement biologique, les eaux usées subissent une étape de clarification au cours de laquelle au moins les boues destinées à être retraitées par ozonation et agitation mécanique sont séparées desdites eaux usées.

D'autres caractéristiques et avantages de l'invention apparaîtront au cours de la description suivante de plusieurs de ses formes de réalisation, données à titre d'exemples non limitatifs, en regard des dessins joints.

Sur les dessins :
- la figure 1 est une vue schématique d'une installation de traitement d'eaux usées mettant en oeuvre un procédé selon une forme de réalisation de l'invention,
- les figures 2 à 4 sont des schémas bloc montrant plus en détail le contenu de l'ensemble 9 de la figure 1,
- les figures 5 à 8 sont des vues schématiques montrant plus en détail le contenu du dispositif 10 des figure 2 à 4, dans lequel est mis en oeuvre le traitement combiné d'ozonation et d'agitation mécanique des boues retraitées,
- et la figure 9 est une vue similaire à la figure 1, pour une autre forme de réalisation de l'invention.

Sur les différentes figures, les mêmes références désignent des éléments identiques ou similaires.

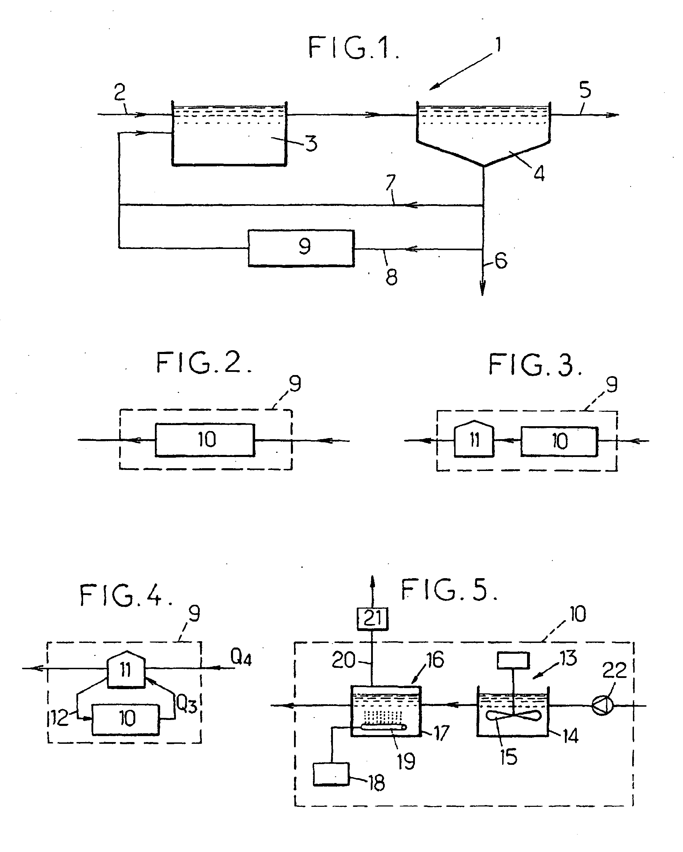

La figure 1 représente très schématiquement une station d'épuration 1 d'eaux usées comprenant :
- une arrivée 2 d'eaux usées chargées en matières organiques,
- un ou plusieurs réacteurs de traitement biologique, par exemple un bassin d'aération 3 dans lequel lesdites matières organiques sont dégradées par des micro-organismes en produisant des boues, ce bassin d'aération 3 pouvant être le cas échéant associé à ou remplacé par un ou plusieurs autres dispositifs de traitement biologique tels que réacteurs à cultures fixées, digesteurs anaérobies, ou autres,
- un clarificateur 4, ou tout autre système de séparation solide-liquide, qui reçoit les eaux usées après leur passage dans le bassin d'aération 3 et qui sépare l'eau et les boues,
- une sortie d'eau traitée 5, qui recueille l'eau en sortie du clarificateur 4,
- une évacuation de boues 6, qui recueille les boues en sortie du clarificateur 4,
- une première boucle de recyclage 7, qui recueille une partie des boues au niveau de l'évacuation 6 et qui recycle ces boues en tête du bassin d'aération 3, cette première boucle de recyclage 7 pouvant le cas échéant être supprimée (cette boucle de recyclage peut par exemple assurer un débit représentant de 50 à 300 % du débit nominal d'effluent urbain ou industriel traité par la station d'épuration),
- une deuxième boucle 8 de dégradation des boues, qui recueille également une partie des boues au niveau de l'évacuation 6 et qui renvoie ces boues en tête du bassin d'aération 3 après passage dans un ensemble 9 de traitement de boues où lesdites boues subissent au moins un traitement combiné d'ozonation et d'agitation mécanique.

Comme représenté sur les figures 2 à 4, l'ensemble 9 de traitement de boues peut comprendre :
- soit uniquement un dispositif 10 d'ozonation et d'agitation mécanique (figure 2),
- soit un digesteur aérobie ou anaérobie 11 disposé en aval d'un dispositif 10 d'ozonation et d'agitation mécanique (figure 3), une fraction des boues sortant du digesteur 11 pouvant alors le cas échéant être évacuée au lieu de recycler la totalité de ces boues en tête du bassin d'aération 3,
- soit un digesteur anaérobie 11 comportant une boucle de recirculation 12 (figure 4) dans laquelle est intégré un dispositif 10 d'ozonation et d'agitation mécanique, le débit de boues Q4 prélevé au niveau de l'évacuation de boues 6 étant généralement inférieur au débit de boues Q3 qui parcourt la boucle de recyclage 12 entre l'entrée et la sortie du digesteur 11 (comme dans le cas de la figure 3, une fraction des boues sortant du digesteur 11 peut alors le cas échéant être évacuée au lieu de recycler la totalité de ces boues en tête du bassin d'aération 3).

Comme représenté sur la figure 5, le dispositif 10 d'ozonation et d'agitation mécanique comprend un agitateur mécanique 13 consistant généralement en une enceinte 14 comprenant une ou plusieurs turbines 15, ou éventuellement des mixeurs dynamiques, des hydroéjecteurs, des broyeurs... ou tout autre système d'agitation mécanique.

On notera que les ultrasons sont considérés comme un phénomène physique (génération d'ondes acoustiques), et n'entrent donc pas dans la catégorie des phénomènes dits mécaniques au sens de la présent invention, mettant en oeuvre des dispositifs en mouvement.

La puissance du système d'agitation mécanique est choisie de façon que l'ensemble 9 de traitement de boues dissipe une énergie mécanique d'agitation.

De plus, le dispositif 10 d'ozonation et d'agitation mécanique comprend un réacteur d'ozonation 16 qui consiste généralement en une enceinte fermée 17 qui reçoit la boue à retraiter et dans laquelle on injecte de l'ozone provenant d'un ozoneur 18, au moyen de buses d'injection 19 (éventuellement remplacées par des diffuseurs poreux, des hydroéjecteurs ou autres), ces buses étant couplées le cas échéant à des mélangeurs statiques ou dynamiques.

L'ozonation consomme globalement de 0,001 à 0,02 g d'ozone par g de matières sèches contenues dans les boues retraitées qui traversent l'ensemble 9 de traitement de boues (dans le cas où les boues retraitées passeraient plusieurs fois dans le réacteur d'ozonation 16, la consommation d'ozone susmentionnée serait la consommation totale sur l'ensemble des passages des boues dans le réacteur d'ozonation).

L'enceinte 17 peut le cas échéant être pressurisée, et fait dans ce cas l'objet de calculs de structure appropriés.

De plus, cette enceinte 17 comporte un évent 20 d'où sort un effluent gazeux comprenant au moins de l'oxygène et de l'ozone non consommés par le traitement des boues, cet évent 20 pouvant être le cas échéant relié à un dispositif 21 qui détruit l'ozone par chauffage ou par passage sur du charbon actif, ou bien ledit effluent gazeux peut ensuite être réutilisé en un point quelconque de la station d'épuration, par exemple par injection dans les eaux usées en tête du bassin d'aération 3, ou par mise en contact avec tout autre liquide résultant du traitement des eaux usées (eaux traitées en sortie du bassin d'aération ou en sortie du clarificateur, ou autres).

L'agitateur mécanique 13 et le réacteur d'ozonation 16 sont généralement alimentés en boues par une pompe 22 qui peut le cas échéant participer à l'agitation mécanique des boues, auquel cas la pompe 22 peut avantageusement être de type centrifuge.

Dans ce cas, l'énergie mécanique d'agitation apportée aux boues par l'agitateur 13 pourra, le cas échéant, être inférieure à 10 kJ par kg de matières sèches de boues retraitées (ou le cas échéant 600 kJ par m³ de boues retraitées), pourvu que la somme de cette énergie mécanique d'agitation avec l'énergie mécanique apportée aux boues par la pompe 22 soit comprise entre 10 et 2000 kJ par kg de matières sèches de boues retraitées (le cas échéant de 600 à 14400 kJ par m³ de boues retraitées).

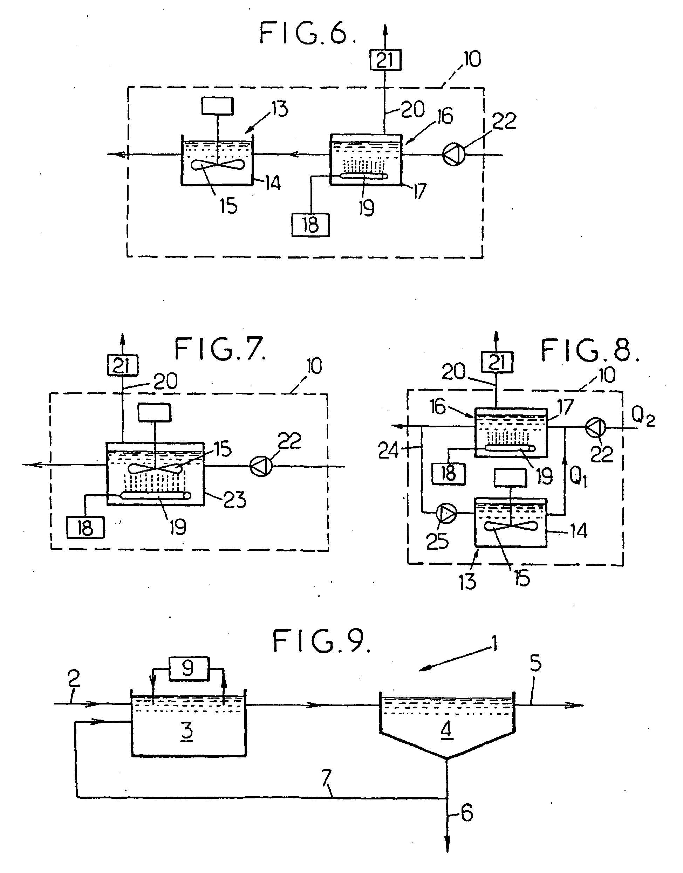

Bien entendu, l'agitateur mécanique 13 et réacteur d'ozonation 16 ne sont pas obligatoirement disposés comme sur la figure 5 ; comme représenté sur les figures 6 à 8, il est possible :
- de disposer le réacteur d'ozonation 16 en amont de l'agitateur mécanique 13 (figure 6),
- de disposer la turbine 15 ou autre système d'agitation mécanique dans le réacteur d'ozonation 23 lui-même (figure 7), ce réacteur ayant par ailleurs des caractéristiques similaires au réacteur d'ozonation 16 décrit précédemment,
- de disposer l'agitateur mécanique 13 sur une boucle de recirculation 24 qui prélève un débit Q1 de boues au niveau de la sortie du réacteur d'ozonation 16 et qui renvoie ce débit Q1 à l'entrée dudit réacteur, le débit Q2 de boues qui est prélévé au niveau de l'évacuation de boues 6 et qui rejoint le débit Q1 à l'entrée du réacteur d'ozonation étant généralement inférieur au débit Q1, et la boucle de recirculation 24 étant généralement dotée d'une pompe 25 qui peut le cas échéant participer à l'agitation mécanique des boues, comme décrit précédemment pour la pompe 22, (figure 8).

Enfin, comme représenté sur la figure 9, l'ensemble 9 de traitement de boues, avec toutes ses variantes décrites précédemment, peut éventuellement prélever des boues dans le bassin d'aération 3, et renvoyer les boues retraitées dans le même bassin d'aération.

Plus généralement, l'ensemble 9 de traitement de boues peut prélever les boues à retraiter en un emplacement quelconque de la station d'épuration après au moins un traitement biologique des eaux usées, et renvoyer au moins une partie des boues retraitées vers ce traitement biologique.

Enfin, on notera que les boues retraitées ne subissent à aucun moment une acidification, le pH de ces boues restant toujours supérieur à 5, et de préférence compris entre 6 et 9, de sorte que la réinjection de ces boues dans le traitement biologique de la station d'épuration ne perturbe pas ledit traitement biologique.

## Revendications

1. Procédé d'épuration d'eaux usées chargées en matières organiques, comprenant une étape au cours de laquelle les eaux usées séjournent dans un dispositif principal de traitement biologique (3), où lesdites matières organiques sont dégradées par des micro-organismes en produisant des boues, une partie de ces boues étant soumise à une ozonation combinée avec une agitation mécanique avant d'être renvoyée dans le dispositif principal de traitement biologique (3), les boues ainsi soumises à ozonisation étant dites "boues" retraitées", procédé dans lequel au cours de l'étape d'ozonation, on consomme 0.001 à 0,02 g d'ozone par g de matières sèches de boues retraitées,
**caractérisé en ce qu'**au cours de l'étape d'agitation mécanique, on apporte auxdites boues retraitées une énergie mécanique suffisante pour attaquer les parois cellulaires des bactéries et autres micro-organismes contenus dans cas boues retraitées, cette énergie mécanique étant comprise entre 50 et 3000 kj par kg de matl6ree sèches de boues retraitées.

2. Procédé selon la revendication 1, dans lequel le pH des boues retraitées au toujours compris entre 8 et 9.

3. Procédé selon l'une quelconque des revendications 1 et 2, dans lequel l'agitation mécanique des boues retraitées a lieu avant leur ozonation.

4. Procédé selon l'une quelconque des revendications 1 et 2, **dans** lequel l'agitation mécanique des bouée **retraitées** a lieu après leur ozonation.

5. Procédé selon l'une quelconque des revendications 1 et 2. dans lequel l'agitation mécanique et l'ozonation des boues retraitées ont lieu dans une même enceinte réactionnelle (23).

6. Procédé selon rune quelconque des revendications 1 et 2. dans lequel un certain débit de boues retraitées (Q1), dit premier débit, est prélevé en sortie d'un réacteur d'ozonation (16, 23) où est mise en oeuvre l'ozonation des boues retraitées, ce premier débit subissant alors l'agitation mécanique, ledit premier débit étant ensuite renvoyé au réacteur d'ozonation (18,23) avec un certain débit supplémentaire de boues (Q2) provenant du réacteur biologique principal, dit deuxième débit le deuxième débit (Q2) étant inférieur au premier débit (Q1).

7. Procédé selon l'une quelconque des revendications précédentes, dans lequel les boues retraitées subissent une digestion aérobie ou anaérobie en plus de l'ozonation et de l'agitation mécanique.

8. Procédé selon la revendication 7. dans lequel la digestion aérobie ou anaérobie a lieu après ozonation et agitation mécanique.

9. Procédé selon la revendication 7, dans lequel un certain débit de boues retraitées (Q3) est prélevé en sortie d'un digesteur (11) où est mise en oeuvre la digestion aérobie ou anaérobie des boues retraitées, ce débit de boues retraitées subissant alors l'agitation mécanique et l'ozonation avant d'être renvoyé au digesteur (11) avec un certain débit supplémentaire de boues (Q4) provenant du réacteur biologique principal.

10. Procédé selon l'une quelconque des revendications 7 à 9, dans lequel on envoie au dispositif principal de traitement biologique (3) seulement une partie du boues retraitées ayant subi la digestion aérobie ou anaérobie, et dans lequel on évacue une autre partie des boues retraitées sortant du digesteur

11. Procédé selon l'une quelconque des revendications précédentes, dans lequel l'étape d'ozonation est mise en oeuvre dans un réacteur d'ozonation (16) qui comporte au moins un évent (20) d'où sort un effluent gazeux comprenant au moins de l'ozone et de l'oxygène, le procédé comportant en outre une étape consistant à collecter cet effluent gazeux, et à réutiliser ledit effluent gazeux pour traiter les eaux usées ou un autre liquide résultant du traitement de ces eaux usées.

12. Procédé selon la revendication 11, dans lequel on détruit l'ozone contenu dans l'effluent gazeux collecté en sortie de l'évent (20), avant de réutiliser ledit effluent gazeux.

13. Procédé selon l'une quelconque des revendications précédentes, dans lequel l'ozonation des boues retraitées est réalisée dans un réacteur d'ozonation (16) travaillant sous pression.

14. Procédé selon l'une quelconque des revendications précédentes, dans lequel après leur passage dans le dispositif principal de traitement biologique (3), les eaux usées subissent une étape de clarification au cours de laquelle au moins les boues destinées à être retraitées par ozonation et agitation mécanique sont séparées desdites eaux usées.

## Claims

1. Method of purifying waste water charged with organic materials, the method including a step in which the waste water remains in a main biological treatment system (3), in which said organic materials are degraded by micro-organisms to produce sludge, some of the sludge being subjected to ozonation combined with mechanical stirring before it is sent to the main biological treatment system (3), the sludge subjected to ozonation in this way being referred to as "treated sludge", method in which from 0.001 g to 0.02 g of ozone per gram of dry material in the treated sludge are consumed during the ozonation step,
**characterized in that** during the mechanical stirring step sufficient mechanical energy is imparted to said treated sludge to attack the cell walls of the bacteria and other micro-organisms contained in the treated sludge, this mechanical energy being from 50 kJ/kg to 3 000 kJ/kg of dry material in the treated sludge.

2. Method according to claim 1, wherein the pH of the treated sludge is always from 6 to 9.

3. Method according to claim 1 or claim 2, wherein the treated sludge is mechanically stirred before its ozonation.

4. Method according to claim 1 or claim 2, wherein the treated sludge is mechanically stirred after its ozonation.

5. Method according to claim 1 or claim 2, wherein the mechanical stirring and the ozonation of the treated sludge take place in the same reaction enclosure (23).

6. Method according to claim 1 or claim 2, wherein a particular flowrate (Q1) of treated sludge, referred to as the first flowrate, is taken from the outlet of an ozonation reactor (16, 23) in which the treated sludge is subjected to ozonation, this first flowrate is then subjected to mechanical stirring, and said first flowrate is then sent to the ozonation reactor (16, 23) with a particular additional flowrate (Q2) of sludge from the main biological reactor, referred to as the second flowrate, the second flowrate (Q2) being lower than the first flowrate (Q1).

7. Method according to any preceding claim, wherein the treated sludge is subjected to aerobic or anaerobic digestion in addition to ozonation and mechanical stirring.

8. Method according to claim 7, wherein the aerobic or anaerobic digestion takes place after ozonation and mechanical stirring.

9. Method according to claim 7, wherein a particular flowrate (Q3) of the treated sludge is taken from the outlet of a digester (11) in which the treated sludge undergoes the aerobic or anaerobic digestion and this flowrate of treated sludge is then subjected to mechanical stirring and ozonation before it is sent to the digester (11) with a particular additional flowrate (Q4) of sludge from the main biological reactor.

10. Method according to any of claims 7 to 9, wherein the main biological treatment system (3) is sent only some of the treated sludge that has been subjected to aerobic or anaerobic digestion and further treated sludge leaving the digester is evacuated.

11. Method according to any preceding claim, wherein the ozonation step is implemented in an ozonation reactor (16) which includes at least one vent (20) from which exits a gaseous effluent including at least ozone and oxygen, the method further including a step of collecting this gaseous effluent and re-using said gaseous effluent to treat the waste water or other liquid resulting from the treatment of the waste water.

12. Method according to claim 11, wherein the ozone contained in the gaseous effluent collected from the outlet of the vent (20) is destroyed before said gaseous effluent is re-used.

13. Method according to any preceding claim, wherein the treated sludge is subjected to ozonation in a pressurized ozonation reactor (16).

14. Method according to any preceding claim, wherein the waste water is subjected to a clarification step after passing through the main biological treatment system (3) and in which at least the sludge to be treated by ozonation and mechanical stirring is separated from said waste water.

## Patentansprüche

1. Verfahren zur Reinigung von mit organischen Stoffen belastetem Abwasser, umfassend einen Schritt, in dessen Verlauf das Abwasser in einer Hauptvorrichtung zur biologischen Behandlung (3), in der die genannten organischen Stoffe durch Mikroorganismen unter Schlammerzeugung abgebaut werden, wobei ein Teil dieses Schlamms einer Ozonisierung in Kombination mit einer mechanischen Bewegung unterzogen wird, bevor er in die Hauptvorrichtung zur biologischen Behandlung (3) zurückgeleitet wird, und wobei der auf diese Weise einer Ozonisierung unterzogene Schlamm "wiederaufbereiteter Schlamm" genannt wird, wobei, während des Schritts der Ozonisierung, 0,001 bis 0,02 g Ozon pro g Trockensubstanz des wiederaufbereiteten Schlamms verbraucht werden, **dadurch gekennzeichnet, dass** dem genannten wiederaufbereiteten Schlamm während des Schritts der mechanischen Bewegung mechanische Energie zugeführt wird, die ausreichend ist, um die Zellwände der in diesem wiederaufbereiteten Schlamm enthaltenen Bakterien und anderen Mikroorganismen anzugreifen, wobei diese mechanische Energie zwischen 50 und 3000 kJ pro kg Trockensubstanz des wiederaufbereiteten Schlamms liegt.

2. Verfahren nach Anspruch 1, bei dem der pH-Wert des wiederaufbereiteten Schlamms stets zwischen 6 und 9 liegt.

3. Verfahren nach einem der Ansprüche 1 und 2, bei dem die mechanische Bewegung des wiederaufbereiteten Schlamms vor seiner Ozonisierung stattfindet.

4. Verfahren nach einem der Ansprüche 1 und 2, bei dem die mechanische Bewegung des wiederaufbereiteten Schlamms nach seiner Ozonisierung stattfindet.

5. Verfahren nach einem der Ansprüche 1 und 2, bei dem die mechanische Bewegung und die Ozonisierung des wiederaufbereiteten Schlamms in demselben Reaktionsbehälter (23) stattfinden.

6. Verfahren nach einem der Ansprüche 1 und 2, bei dem eine bestimmte Menge wiederaufbereiteten Schlamms (Q1), Erstmenge genannt, am Ausgang eines Ozonisierungsreaktors (16, 23), in dem die Ozonisierung des wiederaufbereiteten Schlamms durchgeführt wird, entnommen wird, danach diese Erstmenge der mechanischen Bewegung unterzogen wird, anschließend die genannte Erstmenge in den Ozonisierungsreaktor (16, 23) zurückgeleitet wird, zusammen mit einer bestimmten zusätzlichen Menge Schlamms (Q2), die aus dem biologischen Hauptreaktor stammt, genannt Zweitmenge, wobei die Zweitmenge (Q2) geringer ist als die Erstmenge (Q1).

7. Verfahren nach einem der vorangehenden Ansprüche, bei dem der wiederaufbereitete Schlamm zusätzlich zur Ozonisierung und mechanischen Bewegung einer aeroben oder anaeroben Ausfaulung unterzogen wird.

8. Verfahren nach Anspruch 7, bei dem die aerobe oder anaerobe Ausfaulung nach der Ozonisierung und mechanischen Bewegung stattfindet.

9. Verfahren nach Anspruch 7, bei dem eine bestimmte Menge wiederaufbereiteten Schlamms (Q3) am Ausgang eines Faulraums (11), in dem die aerobe oder anaerobe Ausfaulung des wiederaufbereiteten Schlamms stattfindet, entnommen wird und diese Menge wiederaufbereiteten Schlamms dann der mechanischen Bewegung und Ozonisierung unterzogen wird, bevor sie zusammen mit einer bestimmten zusätzlichen Menge Schlamms (Q4), die aus dem biologischen Hauptreaktor stammt, wieder in den Faulraum geleitet wird.

10. Verfahren nach einem der Ansprüche 7 bis 9, bei dem nur ein Teil des der aeroben oder anaeroben Ausfaulung unterzogenen wiederaufbereiteten Schlamms in die Hauptvorrichtung zur biologischen Behandlung (3) geleitet wird und bei der ein anderer Teil des aus dem Ausfaulraum stammenden wiederaufbereiteten Schlamms abgelassen wird.

11. Verfahren nach einem der vorangehenden Ansprüche, bei dem der Ozonisierungsschritt in einem Ozonisierungsreaktor (16) durchgeführt wird, der wenigstens einen Abzug (20) umfasst, aus dem ein gasförmig austretendes Material ausströmt, umfassend wenigstens Ozon und Sauerstoff, wobei das Verfahren darüber hinaus einen Schritt umfasst, der darin besteht, diesen gasförmigen Abfallstoff aufzufangen und den genannten gasförmigen Abfallstoff wieder zu verwenden, um das Abwasser oder eine andere, aus der Behandlung dieses Abwassers stammende Flüssigkeit aufzubereiten.

12. Verfahren nach Anspruch 11, bei dem das in dem am Ausgang des Abzugs (20) aufgefangenen gasförmigen Abfallstoff enthaltene Ozon zerstört wird, bevor der genannte gasförmige Abfallstoff wiederverwendet wird.

13. Verfahren nach einem der vorangehenden Ansprüche, bei dem die Ozonisierung des wiederaufbereiteten Schlamms in einem unter Druck arbeitendem Ozonisierungsreaktor (16) erfolgt.

14. Verfahren nach einem der vorangehenden Ansprüche, bei dem das Abwasser nach Durchlaufen der Hauptvorrichtung zur biologischen Behandlung (3) einem Schritt der Klärung unterzogen wird, in dessen Verlauf wenigstens der für die Wiederaufbereitung durch Ozonisierung und mechanische Bewegung bestimmte Schlamm von dem genannten Abwasser getrennt wird.
